# EUROPEAN PATENT APPLICATION

(11) **EP 4 068 855 A1**
(43) Date of publication of application: **05.10.2022**
(21) Application number: 21199793.7
(22) Date of filing: 29.09.2021
(51) Int. Cl.: H04W 36/24, H04W 36/00

(54) **METHOD FOR RECOMMENDING TARGET CELL FOR HANDOVER IN OPEN-RADIO ACCESS NETWORK ENVIRONMENT**

(30) Priority: 31.03.2021 IN 202111015011
(71) Applicant: Sterlite Technologies Limited, Haryana 122002 (IN)
(72) Inventor: PAREKH, Shyam, California, 94563 (US); TANG, Kevin, California, 94568 (US); KUMAR, Abhishek, 122002 Haryana (IN); MANNA, Tanumay, 122002 Haryana (IN)
(74) Representative: Hepworth Browne

(57) **Abstract**

A method for identifying a target cell for handover (HO) by a Radio access network (RAN) controller (102) in an open RAN (O-RAN) environment (200) includes obtaining at least one quality of service (QoS) class identifier (QCI) level associated with an active bearer in the user equipment (112a-e), obtaining a received signal strength value, a first load values and a plurality of second load values for the neighbour cells (108a, 108b) and selecting the target cell from the neighbour cells (108a, 108b) based on the QCI level in the user equipment (112a-e) and the received signal strength value, the first load value and the second load value of neighbour cells (108a, 108b).

## Description

### TECHNICAL FIELD

Embodiments of the present disclosure relate to the field of wireless communication system. And more particularly, relates to a method for recommending a target cell for handover in an open-radio access network environment.

The present application claims the benefit of Indian Application No. 202111015011 titled "Method For Recommending Target Cell For Handover In Open-radio Access Network Environment" filed by the applicant on 31st March 2022, which is incorporated herein by reference in its entirety.

### Background Art

While operating in a mobile network, if a user equipment (UE) is moved from a service area defined by "X" cell into another service area that defined by "Y" cell, the UE must disconnect with base station associated with service area "X" and connect with a new base station associated with service area "Y" (i.e., establish a new connection). This operation is known as handover (HO) or cell reselection. In wireless communication systems, network congestion is a growing problem for wireless network operators.

For example, for some UEs, the cell offering the strongest radio reception may also be the most heavily loaded with other UEs who are currently being served. Handing over still more UEs into that cell (most heavily loaded cell) shall aggravate the congestion that may already exist. This may result in degraded quality of service, dropping of calls, denial of service, and the like. All of these may result in loss of reputation of wireless network operators and loss of revenue for the wireless network operators.

Although the need for HO, the unnecessarily switching of the serving cell and in case of switching to a loaded cell, in both these cases, causes wastage of radio resources and a decrease in system efficiency. Hence, in order to effectively manage the HO operation, it is vital to monitor and consider other parameters, including the variation therein, constituting the HO in consideration with load balancing of the cells. The parameters may include identification of target cell for HO, signal strength (RSRP/RSRQ), cell load values, cell indication offset (CIO), hysteresis loss, and the like. Especially, considering the current expansion in the wireless communication networks is becoming increasingly complex and due to the introduction of new standards and protocols (such as 4G/5G standards), the monitoring of these parameters in order to effectively utilize the radio resources is at utmost priority. Some of the prior art references are given below:

WO2018005089A1 discloses a method which involves performing a set of checks for verifying that a mobile terminal supports interference cancellation. A handover (HO)-offset value is determined to change a HO threshold to trigger HO of a wireless connection of the mobile terminal from first cell to second cell with the HO-offset value being determined based on a resource-utilization level of the second cell. A control message is transmitted to cause the mobile terminal to change the HO threshold, where the control message is transmitted in response to the checks to be passed.

US20130109380A1 discloses a method which involves providing neighbor cell information identifying neighbor cells of a source cell and neighbor scrambling codes of the neighbor cells. A report is received from a wireless terminal through the source cell such that the report identifies a reported scrambling code of a reported cell and a detected scrambling code of a detected cell other than the reported cell. One of the neighbor cells is selected as a target cell based on the reported scrambling code, the detected scrambling code and the neighbor cell information.

While the prior arts cover various approaches to overcome the above stated drawbacks, there are no significant considerations for using QCI values (QoS requirements) to counter them. Thus, there is an urgent need for a technical solution that overcomes the above stated limitations and provide a method for recommending a target cell for handover in an open-radio access network environment.

### SUMMARY OF THE DISCLOSURE

Embodiments of the present disclosure provide a method for identifying a target cell for handover (HO) by a Radio access network (RAN) controller in an open RAN (O-RAN) environment.

According to the first aspect of the present disclosure, the method includes steps of obtaining at least one quality of service (QoS) class identifier (QCI) level associated with at least one active bearer in the plurality of user equipment, obtaining a received signal strength value, a first load values and a plurality of second load values for each of the plurality of neighbour cells and selecting the target cell from the plurality of neighbour cells based on at least one QCI level in the plurality of user equipment and the received signal strength value, the first load value and the plurality of second load values for each the plurality of neighbour cells.

In accordance with an embodiment of the present disclosure, the received signal strength value comprises one of a Reference Signals Received Power (RSRP) and/or a Reference Signal Received Quality (RSRQ).

According to the second aspect of the present disclosure, the Open-Radio Access Network (O-RAN) architecture includes a Service Management and Orchestration (SMO) framework and a radio access network (RAN) intelligent controller (RIC).

In accordance with an embodiment of the present disclosure, the radio access network (RAN) intelligent controller (RIC) is a non-real-time-radio intelligent controller (Non-RT-RIC) and/or a near-real-time-radio intelligent controller (Near-RT-RIC).

In accordance with an embodiment of the present disclosure, the RAN controller is connected with a plurality of user equipment via one or more E2 nodes positioned in a serving cell.

In accordance with an embodiment of the present disclosure, the serving cell is adjacent to a plurality of neighbour cells and the serving cell covers a location for serving the plurality of user equipment.

In accordance with an embodiment of the present disclosure, the base stations is operably configured to handle transmission and reception of signals associated with either the serving cell and the neighbour cells.

In accordance with an embodiment of the present disclosure, the plurality of neighbour cells with at least two threshold signal strength values.

According to the third aspect of the present disclosure, the first load value comprises average physical resource block (PRB) values of each of the plurality of neighbour cells.

According to the fourth aspect of the present disclosure, the plurality of second load values comprises average PRB values by at least one QCI level for each of the plurality of neighbour cells.

In accordance with an embodiment of the present disclosure, at least one QCI level corresponds to a QoS value required by at least one active bearer in the plurality of user equipment to provide a service.

In accordance with an embodiment of the present disclosure, at least one active bearer corresponds to an active connection between at least one user equipment from the plurality of user equipment and a packet data network gateway to provide the service.

According to the fifth aspect of the present disclosure, the method identifies at least one order number for each of at least one QCI level based on a predefined mapping of at least one order number with at least one QCI level, one or more available packet delay budget and one or more available packet error loss rate tolerance.

According to the sixth aspect of the present disclosure, the method performs sorting of the plurality of neighbour cells using a nested dual level threshold process. In particular, the target cell is selected from the sorted plurality of neighbour cells.

In accordance with an embodiment of the present disclosure, the method performs sorting of the plurality of neighbour cells using a nested dual level threshold process.

According to the seventh aspect of the present disclosure, the nested dual level threshold process includes comparing the received signal strength value of each of the plurality of neighbour cells with at least two threshold signal strength values and comparing the average physical resource block (PRB) utilization values of each of the plurality of neighbour cells with at least two threshold physical resource block (PRB) utilization values.

According to the eighth aspect of the present disclosure, the method further includes steps of identifying an order number for each of at least one QCI value based on a predefined mapping of the order number with at least one QCI value, one or more available packet delay budget and one or more available packet error loss rate tolerance, assigning lowest order number from the identified order number for each of at least one QCI value for each active bearer for the UE, performing sorting of neighbour cells by comparing a received signal strength and a PRB utilization value of each of the plurality of neighbour cells with at least two received signal strength thresholds and the first load value for each of the neighbour cells and selecting a target cell from the sorted plurality of neighbour cells, and the target cell has lowest sum of the plurality of second load values for each of the orders less than or equal to the assigned lowest order number associated with one or more active bearers in the UE.

In accordance with an embodiment of the present disclosure, the plurality of second load values for each of the plurality of neighbour cells comprises 9 average load levels.

In accordance with an embodiment of the present disclosure, the plurality of UE is a computer, a personal digital assistant (PDA), a laptop or electronic notebook, a cellular telephone, and alike.

According to the foregoing solutions, a method is employed for recommending target cell for handover (HO) in open-radio access network environment, to identify target cell for the HO using QCI levels corresponding to QCI values of the active bearers in the UE and to achieve improved load balancing across different cells in 4G/LTE and 5G networks while improving or preserving the QoS received by a UE subjected to a handover.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial representation illustrating an exemplary Radio access network (RAN) in accordance with an embodiment of the present disclosure;
Fig. 2 is a pictorial representation illustrating an Open-Radio access network (O-RAN) architecture in accordance with an embodiment of the present disclosure;
Fig. 3 is a flowchart illustrating a method for identifying a target cell for handover (HO) by the radio access network (RAN) controller in the open RAN (O-RAN) environment in accordance with an embodiment of the present disclosure;
Fig. 4 is a flow chart illustrating a method for QoS sensitive identification of the HO target cell in accordance with an embodiment of the present disclosure.

### REFERENCE LIST

Exemplary Radio Access Network (Ran) 100
User Equipment (UEs) 112a, 112b, 112c, 112d, And 112e
Base Station 104
Neighbour Base Stations 106a - 106b
Neighbour Cells 108a - 108b
Serving Cell 110

The method and system are illustrated in the accompanying drawings, throughout which like reference letters indicate corresponding parts in the various figures.

It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". [0052] Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

**Following terms shall apply throughout the present disclosure:**
Standard networking terms and abbreviation: RAN: a RAN may stand for a radio access network. The radio access network (RAN) may be a part of a telecommunications system that may connect individual devices to other parts of a network through radio connections. The RAN may provide a connection of user equipment (UE) such as a mobile phone or computer with the core network of the telecommunication systems. The RAN may be an essential part of the access layer in the telecommunication systems which utilize base stations (such as e node B, g node B) for establishing radio connections.

Active bearer: An active bearer corresponds to tunnel connections between the UE and a packet data network gateway to provide a service.

O-RAN: O-RAN is an evolved version of prior radio access networks, makes the prior radio access networks more open and smarter than previous generations. The O-RAN provides real-time analytics that drives embedded machine learning systems and artificial intelligence back end modules to empower network intelligence. Further, the O-RAN includes virtualized network elements with open and standardized interfaces. The open interfaces are essential to enable smaller vendors and operators to quickly introduce their own services or enable operators to customize the network to suit their own unique needs. Open interfaces also enable multi vendor deployments, enabling a more competitive and vibrant supplier ecosystem. Similarly, open-source software and hardware reference designs enable faster, more democratic and permission less innovation. Further, the O-RAN introduces a self-driving network by utilizing new learning-based technologies to automate operational network functions. These learning-based technologies make O-RAN intelligent. Embedded intelligence, applied at both component and network levels, enables dynamic local radio resource allocation and optimizes network-wide efficiency. In combination with O-RAN's open interfaces, AI-optimized closed-loop automation is a new era for network operations.

QoS Class identifier (QCI): QCI level (alternatively called as QCI value) corresponds to a QoS value required by an active bearer or each of the active bearer in the UE to indicate the Quality of Service (QoS) required by that bearer.

Near real-time RAN Intelligent Controller (Near-RT RIC): Near-RT RIC is a logical function that enables near-real-time control and optimization of O-RAN elements and resources via fine-grained data collection and actions over the E2 interface.

Non-Real Time Radio Intelligent Controller (Non-RT-RIC): Non-RT-RIC is a logical function that enables non-real-time control and optimization of RAN elements and resources, AI/ML workflow including model training and updates, and policy-based guidance of applications/features in near-RT RIC. It is a part of the Service Management & Orchestration Framework and communicates to the near-RT RIC using the A1 interface. Non-RT control functions may tolerate control loop delay of 1 second or larger, while near-real Time (near-RT) control functions are required to have the control loop delay of less than 1 second. Non-RT functions include service and policy management, RAN analytics and model-training for some of the near-RT RIC functionalities, and non-RT RIC optimization.

O-CU is O-RAN Central Unit, which is a logical node hosting RRC, SDAP and PDCP protocols.

O-CU-CP is O-RAN Central Unit - Control Plane, which is a logical node hosting the RRC and the control-plane part of the PDCP protocol.

The O-CU-UP is O-RAN Central Unit - User Plane, which is a logical node hosting the user-plane part of the PDCP protocol and the SDAP protocol.

O-DU is O-RAN Distributed Unit, which is a logical node hosting RLC/MAC/High-PHY layers based on a lower layer functional split.

O-RU is O-RAN Radio Unit, which is a logical node hosting a Low-PHY layer and RF processing based on a lower layer functional split. This is similar to 3GPP's "TRP" or "RRH" but more specific in including the Low-PHY layer (FFT/iFFT, PRACH extraction).

O1 interface is an interface between management entities in a Service Management and Orchestration (SMO) Framework and O-RAN managed elements, for operation and management, by which FCAPS management, Software management, File management shall be achieved.

xAPP is an independent software plug-in to the Near-RT RIC (206) platform to provide functional extensibility to the RAN by third parties." The near-RT RIC (206) controller can be provided with different functionalities by using programmable modules as xAPPs, from different operators and vendors.

gNB: New Radio (NR) Base stations which have the capability to interface with 5G Core named as NG-CN over NG-C/U (NG2/NG3) interface as well as 4G Core known as Evolved Packet Core (EPC) over S1-C/U interface.

LTE eNB: An LTE eNB is evolved eNodeB that can support connectivity to EPC as well as NG-CN.

Non-standalone NR: It is a 5G Network deployment configuration, where a gNB needs an LTE eNodeB as an anchor for control plane connectivity to 4G EPC or LTE eNB as an anchor for control plane connectivity to NG-CN.

Standalone NR: It is a 5G Network deployment configuration where gNB does not need any assistance for connectivity to the core Network, it can connect by its own to NG-CN over NG2 and NG3 interfaces.

Non-standalone E-UTRA: It is a 5G Network deployment configuration where the LTE eNB requires a gNB as the anchor for control plane connectivity to NG-CN.

Standalone E-UTRA: It is a typical 4G network deployment where a 4G LTE eNB connects to EPC.

Xn Interface: It is a logical interface that interconnects the New RAN nodes i.e., it interconnects gNB to gNB and LTE eNB to gNB and vice versa.

Reference signal received power (RSRP): RSRP may be defined as the linear average over the power contributions (in [W]) of the resource elements that carry cell-specific reference signals within the considered measurement frequency bandwidth." RSRP may be the power of the LTE Reference Signals spread over the full bandwidth and narrowband.

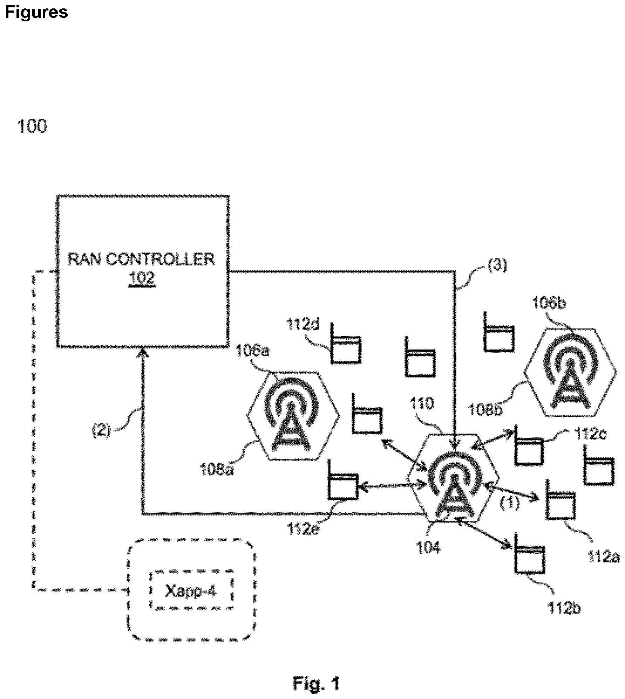

Fig. 1 is a pictorial representation illustrating an exemplary Radio access network (RAN) in accordance with an embodiment of the present disclosure. The exemplary radio access network (RAN) (100) that comprises a plurality of user equipment (UEs) such as (112a, 112b, 112c, 112d, and 112e) connected to a serving base station (104) positioned in a serving cell (110). Further, the RAN (100) comprises a plurality of neighbour base stations (106a and 106b) positioned in respective neighbour cells (108a and 108b). The radio access network (RAN) is a part of a telecommunications system that may connect individual devices to other parts of a network through radio connections. And, the RAN may provide a connection of user equipment(s) such as a mobile phone or computer with the core network of the telecommunications system. Furthermore, the RAN may be an essential part of the access layer in the telecommunications system which utilizes base stations (such as eNB and gNB) for establishing radio connections.

In accordance with an embodiment of the present disclosure, the RAN (100) comprises a RAN controller (102). The RAN (100), in one example, is implemented in a virtualized network architecture (such as for example, open-radio access network (O-RAN)) and comprises at least one RAN controller (102). In some examples, the RAN controller (102) is configured to perform operations related to handover (HO) of the plurality of UEs (112a-e). In some other examples, the RAN controller (102) may be implemented via a virtualized application that is xApps e.g., xApp-4 is configured to virtually perform the operations of the RAN controller (102).

In an implementation, the RAN controller (102) is an individual controller, which is separate from the RAN (100). In this situation, the RAN controller (102) is connected with the RAN (100) by means of a network connection such as radio connections.

In an implementation, parameters used by xApp-4 may include but may not be limited to minimum RSRP/RSRQ Threshold = TH₀ = -114 dBm (for RSRP) or -13 dB (for RSRQ) (Default), RSRP/RSRQ band threshold-1 = TH₁ = -103 dBm (for RSRP) or - 9 dB (for RSRQ) (Default), RSRP/RSRQ band threshold-2 = TH₂ = -85 dBm (for RSRP) or -5 dB (for RSRQ) (Default), "Average" load threshold-1 = PRB_{TH1} = 0.6 (Default), "Average" load threshold-2 = PRB_{TH2} = 0.7 (Default), QTHPT (UE per QCI/5QI Throughput Threshold) = 1 Kbps (Default), NMEAS (Number of individual measurements) used or throughput computation = 8 (Default), and Δ (Inter-measurement interval) = 128 ms (Default).

In accordance with an embodiment of the present disclosure, the RAN controller (102) may be configured to communicate with a core network (not shown) comprising an evolved packet core (EPC) using an "S1" interface. More particularly, the RAN controller (102) may communicate with the core network (not shown) comprising Mobility Management Entity (MME) and a User plane entity (UPE) identified as Serving Gateway (S-GW) using S1-C and S1-U for control plane and user plane, respectively.

In accordance with an embodiment of the present disclosure, each of the plurality of UEs (112a-e) periodically measures received signal strengths/qualities from all base stations (104, 106a and 106b) and construct signal strength/quality indicators such as reference signal received power (RSRP) and reference signal received quality (RSRQ) values as defined in the 3GPP standards. Then using the criteria as defined in the 3GPP standards, when an A3 event triggers, these measurement results are reported to the serving base station (104). The disclosure is not limited to the A3 event (for example, subscription of multiple events such as A1-A6 and the measurements and handover (HO) parameters defined therein. Any future standards are expected to have equivalent HO events and equivalent measurements and parameters associated with such HO events. For those standards, when such equivalent events trigger, said equivalent measurements are reported (1). The measurements in the form of measurement reports (MRs).

Further, the MRs are first sent (2) to the RAN controller (102). The RAN controller (102) then assists with a real-time HO by recommending a target cell selection, according to the proposed disclosure.

Additionally, base station loads, in terms of number of UEs served, total computational, energy, memory, wireless resource usage levels (e.g., PRB utilization levels) of the base station, etc., are also made available to the RAN controller (102) by MRs. Further, for example, the HO parameters (parameters that help make the handover related decisions when used in conjunction with the MRs) of each cell are also provided to the RAN controller (102). The HO parameters may include offset parameters (i.e., cell individual offset (CIO)), hysteresis parameter and time to trigger parameter defined therein, or equivalent parameters of future standards. In one example, one or more HO parameters may include but may not be limited to RSRP / RSRQ values (received signal strength power or quality), average load values (i.e., PRB - physical resource block values), and cell individual offset values. In some examples, the MRs may also include signal strength metrics that are RSRP and/or RSRQ values.

In accordance with an embodiment of the present disclosure, when the RAN controller (102) receives the MRs and/or HO parameters, it triggers a handover process. The handover process may include a first HO process and a second HO process. The first HO process and second HO process is performed parallelly on the serving cell (110) and on all the neighbour cells (108a and 108b).

In alternative embodiments of the present disclosure, the first HO process and second HO process are triggered simultaneously in parallel. In another example, just a handover process is triggered. That is, multiple HO of the UEs can be performed accurately by the RAN controller (102), which can be configured to perform, parallelly on all the identified target neighbour cells (108a and 108b), the HO process (first and second) from the serving cell (110) to the identified target neighbour cells (108a and 108b).

In accordance with an embodiment of the present disclosure, the base stations (104, 106a and 106b) (may include, for example, an access node such as e.g., a Radio Base Station (RBS), also referred to as e.g., evolved Node B ("eNB"), "eNodeB", "NodeB", "B node", gNB, or BTS (Base Transceiver Station), depending on the technology and terminology used. The base stations (104, 106a and 106b) may be a logical node that handles transmission and reception of signals associated with either the serving cell (110) and the neighbour cells (108a and 108b). The serving cell (110) and the neighbour cells (108a and 108b) may connect to each other via "Xn" interface. The base station (104) and the neighbour base stations (106a and 106b) may connect to one or more antennas, and the respective base stations may act as the serving cell (110) and the neighbour cells (108a and 108b) from the perspective of a UE.

In some implementations, the base station (104) can be configured to broadcast the HO parameters or the updated HO parameters to the plurality of UEs (112a-e) served by the base station (104). The HO parameters, in one example, may also be communicated to the neighbour base stations (106a and 106b) using the "Xn" interface.

In accordance with an embodiment of the present disclosure, the plurality of UEs (112a-e) may be the devices used to initiate a communication, such as a computer, a personal digital assistant (PDA), a laptop or electronic notebook, a cellular telephone, or any other device, component, element, or object capable of initiating voice, audio, video, media, or data exchanges within the RAN (100).

Further, the components of the RAN controller (102) may be implemented using one or more application-specific integrated circuits (ASICs) adapted to perform some or all of the applicable functions in hardware. Alternatively, the functions may be performed by one or more other processing units (or cores), on one or more integrated circuits. In other examples, other types of integrated circuits may be used (e.g., Structured/Platform ASICs, Field Programmable Gate Arrays (FPGAs), and other Semi-Custom ICs), which may be programmed in any manner known in the art. The functions of each unit may also be implemented, in whole or in part, with instructions embodied in a memory, formatted to be executed by one or more general or application-specific processors.

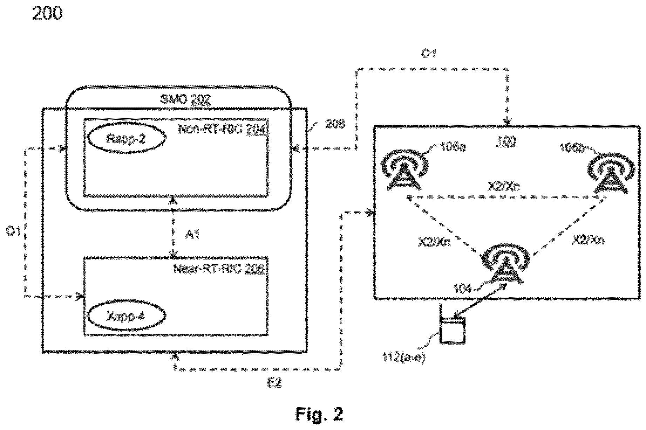

Fig. 2 is a pictorial representation illustrating an Open-Radio access network (O-RAN) architecture in accordance with an embodiment of the present disclosure. The Open-Radio Access Network (O-RAN) architecture (200) includes a Service Management and Orchestration (SMO) framework (202) and a radio access network (RAN) intelligent controller (RIC) (208) connected to the RAN (100). In particular, the SMO (202) is configured to provide SMO functions/services such as data collection and provisioning services of the RAN (100). The RAN (100), herein, is implemented in the O-RAN computing architecture (200). The RAN (100) may implement a single radio access technology (RAT) (4G/5G) or multiple RATs (4G and 5G) using the base stations (104, 106a, 106b, 106c... 106n) located in the RAN (100). The data collection of the SMO framework (202) may include, for example, data related to a bandwidth of a wireless communication network and at least one of the plurality of UEs (112a-e).

Further, the base stations (104, 106a, 106b, 106c... 106n) may be e.g., a Radio Base Station (RBS), also referred to as e.g., evolved Node B ("eNB"), "eNodeB", "NodeB", "B node", gNB, or BTS (Base Transceiver Station), depending on the technology and terminology used. In some examples, the base stations (104, 106a, 106b, 106c... 106n) may be a logical node that handles transmission and reception of signals associated with the plurality of cells. The base station (104) may connect to each other i.e., with the neighbour base stations (106a, 106b..106n) via "Xn" interface either in the same network or to a network node of another network (intra-network). Each base station (104, 106a, 106b, 106c... 106n) may connect to one or more antennas.

In accordance with an embodiment of the present disclosure, the RIC (208) can be a non-real-time-radio intelligent controller (Non-RT-RIC) (204) or a near-real-time-radio intelligent controller (Near-RT-RIC) (206). Particularly, the near real-time RAN Intelligent Controller (near RT RIC) is a logical function that enables near-real-time control and optimization of O-RAN elements and resources via fine-grained data collection and actions over E2 interface. And, the Non-Real Time Radio Intelligent Controller (non-RT-RIC) is a logical function that enables non-real-time control and optimization of RAN elements and resources, AI/ML workflow including model training and updates, and policy-based guidance of applications/features in near-RT RIC. It is a part of the Service Management and Orchestration Framework and communicates to the near-RT RIC using an A1 interface.

Non-RT control functionality (with control loop delay of ≥ 1s) and near-real Time (near-RT) control functions (with control loop delay < 1s) are decoupled in the RIC. The Non-RT functions include service and policy management, RAN analytics and mod

The O-DU is an O-RAN Distributed Unit, which is a logical node hosting RLC/MAC/High-PHY layers based on a lower layer functional split. The O-RU is O-RAN Radio Unit, which is a logical node hosting Low-PHY layer and RF processing based on a lower layer functional split. This is similar to 3GPP's "TRP" or "RRH" but more specific in including the Low-PHY layer (FFT/iFFT, PRACH extraction). An O1 interface is an interface between management entities in Service Management and Orchestration Framework and O-RAN managed elements, for operation and management, by which FCAPS (fault, configuration, accounting, performance, security) management, Software management, File management shall be achieved. The xAPP is an independent software plug-in to the Near-RT RIC platform to provide functional extensibility to the RAN by third parties. The near-RT RIC controller can be provided with different functionalities by using programmable modules as xAPPs, from different operators and vendors.

In accordance with an embodiment of the present disclosure, the Non-RT-RIC (204) may be configured to support intelligent RAN optimization in non-real-time. Further, the Non-RT-RIC (204) can be configured to leverage the SMO services and maybe a part of the SMO (202). One such advantage of configuring the RAN (100) within the O-RAN computing environment and/or O-RAN architecture (200) is leveraging the intellectualization ("Artificial intelligence (AI)/Machine Learning (ML)) of the Non-RT-RIC (204) and the Near-RT-RIC (206).

In accordance with an embodiment of the present disclosure, the Near-RT-RIC (206) may host a plurality of xApps. The xApps (at the Near-RT-RIC (206)) uses an "E2" interface to collect near real-time RAN (100) information and to provide value-added services using these primitives, guided by the policies/configuration and the enrichment data provided by the "A1" interface from the xApps at the Non-RT-RIC (204). An "O1" interface collects data for training in the Non-RT RIC (204) (integrated with the SMO (202)).

In one example, the "E2" and "A1" interface may be used to collect control messages, subscription messages (e.g., subscription to RSRP/RSRQ reports and Limited-time subscription for A3 events and A3 RSRP/RSRQ Reports, cell loading information by QCI), policy trigger messages, indication messages, machine learning (ML) management and enrichment information types of messages, and the like. The real-time measurements comprising RSRP/RSRQ measurements, channel quality measurements and the like. The subscription messages such as, for example, RSRP/RSRP event messages, A3 events messages, limited-time based A3 event messages, cell loading information by QCI, and the like. The policy trigger messages, for example, spectrum allocation policies, radio assignment policies, and the like. The O-RAN architecture (200) comprises a virtualized network architecture having at least one RAN controller (102) that is configured to perform the operations as detailed above.

In accordance with an embodiment of the present disclosure, at least one user equipment positioned in the serving cell (110) is identified for real-time handover trigger by the Radio access network (RAN) controller (102) in the open RAN (O-RAN) environment (200). Particularly, the O-RAN environment (200) has a virtualized network architecture having at least one RAN controller (102). Moreover, the RAN controller (102) is connected with a plurality of E2 nodes. Further, the plurality of E2 nodes is connected with the plurality of user equipment (112a-e) positioned in the serving cell (110). Further, the serving cell (110) covers a location for serving the plurality of user equipment (112a-e). Furthermore, the serving cell (110) is adjacent to the plurality of neighbour cells (108a, 108b).

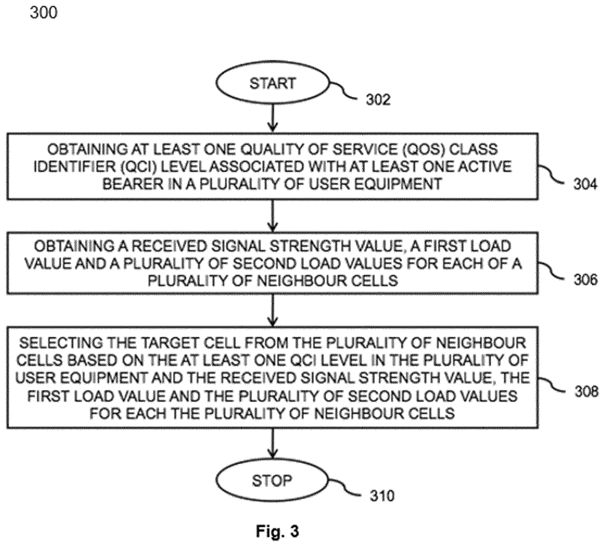

Fig. 3 is a flowchart (300) illustrating a method for identifying a target cell for handover (HO) by the radio access network (RAN) controller (102) in the open RAN (O-RAN) environment (200) in accordance with an embodiment of the present disclosure. The O-RAN environment (200) has a virtualized network architecture that includes the RAN controller (102). And, the RAN controller (102) is connected with the plurality of user equipment (112a-e) positioned in the serving cell (110). Further, the serving cell (110) covers a location for serving the plurality of user equipment (112a-e). The serving cell (110) is adjacent to the plurality of neighbour cells (108a, 108b).

The flow chart 300 initiates at step 302. Following step 302, at step 304, the method obtains at least one quality of service (QoS) class identifier (QCI) level associated with at least one active bearer in the plurality of user equipment (112a-e) (being considered for handover). The at least one QCI level corresponds to the QoS value required by at least one active bearer in the plurality of user equipment (112a-e) (particularly, the one being considered for handover) to provide a service. The at least one active bearer corresponds to the active connections between the plurality of user equipment (112a-e) and the packet data network gateway to provide the service.

At step 306, the method obtains a received signal strength value, a first load value, and a plurality of second load values for each of the plurality of neighbour cells (108a, 108b). The received signal strength value includes one of Reference Signals Received Power (RSRP) and Reference Signal Received Quality (RSRQ). The first load value includes the average physical resource block (PRB) utilization value of each of the plurality of neighbour cells (108a, 108b). The plurality of second load values includes average PRB utilization values by at least one QCI level for each of the plurality of neighbour cells (108a, 108b).

At step 308, the method selects the target cell from the plurality of neighbour cells (108a, 108b) based on at least one QCI level in the plurality of user equipment (112a-e) (being considered for handover), the received signal strength value, the first load value and the plurality of second load values for each the plurality of neighbour cells (108a, 108b).

The method of the flowchart 300terminates at step 310.

The method may include another step to identify at least one order number for each of at least one QCI level. The identification is based on a predefined mapping of at least one order number with at least one QCI level, one or more available packet delay budget and one or more available packet error loss rate tolerance. Further, the method may include yet another step to perform sorting of the plurality of neighbour cells (108a, 108b) using a nested dual level threshold process.

In an example, the target cell is selected from a plurality of sorted neighbour cells. The nested dual level threshold process may include a step to compare the received signal strength value of each of the plurality of neighbour cells (108a, 108b) with at least two threshold signal strength values. The nested dual level threshold process may include another step to compare the average physical resource block (PRB) utilization values of each of the plurality of neighbour cells (108a, 108b) with at least two threshold physical resource block (PRB) utilization values.

Furthermore, the method may include yet another step to identify at least one order number for each of at least one QCI level or QCI value. In an example, the identification is based on the pre-defined mapping of at least one order number with at least one QCI level or QCI value, one or more available packet delay budget and the one or more available packet error loss rate tolerance.

The method may include yet another step to assign the lowest order number from at least one identified order number for each of at least one QCI level or QCI value for the plurality of user equipment (112a-e) being considered for handover. The method may include yet another step to perform sorting of the plurality of neighbour cells (108a, 108b) through comparing the plurality of neighbour cells (108a, 108b) with at least two threshold signal strength values and at least two threshold physical resource block (PRB) utilization values.

The method may include yet another step to select the target cell from the plurality of sorted neighbour cells. In an example, the target cell has the lowest sum of the plurality of second load values for each order number less than or equal to the lowest assigned order number for the active bearers at the user equipment being considered for handover.

In an example, the plurality of second load values for each of the plurality of neighbour cells (108a, 108b) may include 9 average load levels for each neighbour. In another implementation, the plurality of second load values for each of the plurality of neighbour cells (108a, 108b) may include any number of load levels.

Table 1 below illustrates a tabular representation illustrating orders based on QoS class identifiers (QCI), delay budget and loss priority:

**Table 1: Orders Based on Qos Class Identifiers (Qci), Delay Budget and Loss Priority**

| Order | QCI | Delay Budget | Loss Priority |
|---|---|---|---|
| 1 | 3 | 50 ms | 3 |
| 2* | 5 | 100 ms | 1 |
| 3 | 1 | 100 ms | 2 |
| 4 | 7 | 100 ms | 7 |
| 5 | 2 | 150 ms | 4 |
| 6 | 4 | 300 ms | 5 |
| 7 | 6 | 300 ms | 6 |
| 8 | 8 | 300 ms | 8 |
| 9 | 9 | 300 ms | 9 |
| * IMS signaling bearer. Can be excluded from stratified utilization comparison. | | | |

In particular, table 1 has an order number ranging from 1 to 9. When the order number is 1, then the QCI value equals 3, the delay budget is 50 ms, and the loss priority equal to 3. Similarly, if the order number is 2, the QCI value equal to 5, the delay budget is 100 ms, and the loss priority equal to 1. If the order number is 3, the QCI value equal to 1, the delay budget is 100 ms, and the loss priority equal to 2. For the order number 4, the QCI value equals 7, the delay budget is 100 ms, and the loss priority equal to 7. For order number 5, the QCI value equal to 2, the delay budget is 150 ms, and the loss priority equal to 4. And for order number 6, the QCI value equal to 4, the delay budget is 300 ms, and the loss priority equal to 5. For order number 7, the QCI value equals 6, the delay budget is 300 ms, and the loss priority equal to 6. Similarly, for order number 8, the QCI value equal to 8, the delay budget is 300 ms, and the loss priority equal to 8. And, for order number 9, the QCI value equal to 9, the delay budget is 300 ms, and the loss priority equal to 9.

Table 2 below is a tabular representation for services based on the QoS class identifiers (QCIs):

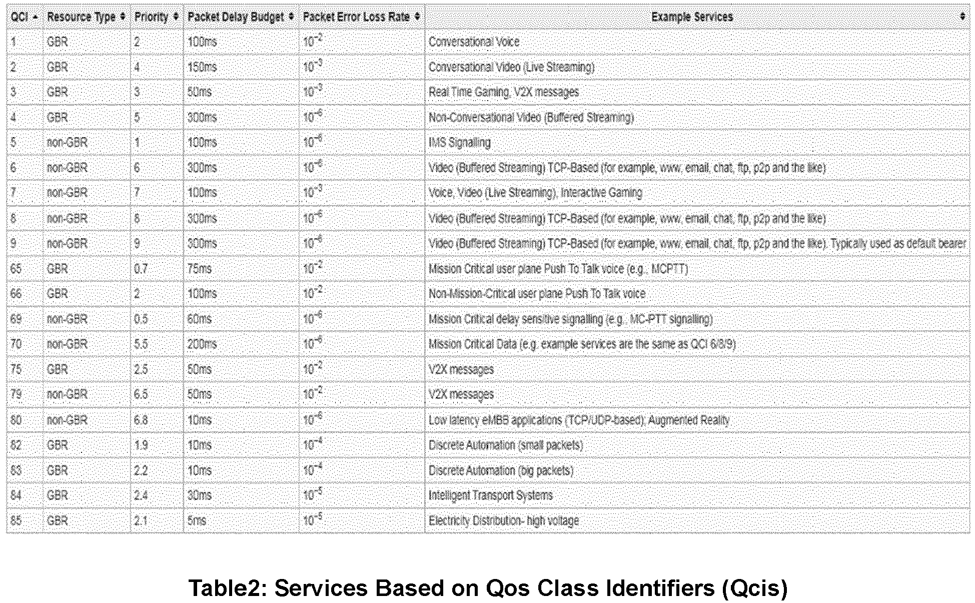

The example table 2 is available on public sources such as Wikipedia (https://en.wikipedia.org/wiki/QoS_Class_ldentifier). The table is shown just for exemplary purpose and does not limit the scope of the disclosure. The table includes various parameters for the implementations of services based on the QCI, resource type, priority, packet delay budget, and packet error loss rate tolerance. In an example, conversational voice service can be attained when the QCI is 1, the resource type is GBR having priority of 2 and packet delay budget of 100 ms having packet error loss rate tolerance equal to 10⁻². Similarly, other types of services may be attained with different values of QCI, resource type, priority, packet delay budgets and packet error loss rate tolerance.

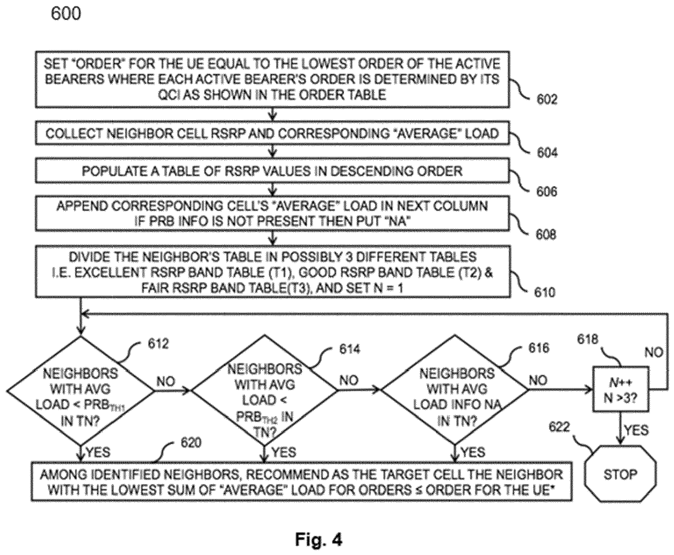

Fig. 4 is a flow chart illustrating a method for QoS sensitive identification of the HO target cell in accordance with an embodiment of the present disclosure. The flowchart 600 starts 602 and proceeds further to 604-622.

At step 602 the method to consider the QCI/5QI levels associated with at least one active bearer in the plurality of UEs (112a-e) (or UE being considered for handover) causing the A3 event. In addition, the method identifies the order # for each of these QCIs/5QIs using the table (400). Further, the method designates the lowest of these orders as the order for the plurality of UEs (112a-e) causing the A3 event (i.e., the UE under the handover consideration).

At step 604, for each neighbour cell identified in the RSRP/RSRQ measurement reports from the plurality of UEs (112a-e) causing the A3 event, the method collects the RSRP/RSRQ values, as well as the "average" total and by QCI/5QI load values.

At step 606, the method tabulates the neighbour cells in the descending order of the RSRP/RSRQ values. If the RSRP/RSRQ value for the neighbour is below THo, the neighbour is excluded from the table.

At step 608, each row (i.e., each neighbour cell) in the table is populated with the "average" total load value for that neighbour cell in a separate column. If the "average" total load value is not available, the method populates the corresponding entry as "NA".

At step (610, the method divides the table in three bands corresponding to excellent RSRP/RSRQ (T1), good RSRP/RSRQ (T2), and fair RSRP/RSRQ (T3) values using the TH₁ and TH₂ thresholds. i.e., all neighbour cells with RSRP/RSRQ values above TH₂ are in the excellent RSRP/RSRQ band, all neighbour cells with RSRP/RSRQ values below or equal to TH₁ are in the fair RSRP/RSRQ band, and the rest of the neighbors are in the good RSRP/RSRQ band. Set the temporary variable n = 1 for traversing each of these bands starting with the one corresponding to the excellent RSRP/RSRQ (T1) values.

At step 612, the method identifies all neighbour cells with the "average" total load values below the threshold PRB_{TH1} in the RSRP/RSRQ band under consideration.

If any neighbour cell(s) are identified, the method proceeds to step 620 for selection of the neighbour cell for the HO recommendation. Else, the method proceeds to step 614.

At step 614 the method to perform the same tasks listed in the step 612 with the threshold value of PRB_{TH2}.

At step 616, the method performs the tasks described in step 612 considering the neighbour cells with the "average" total load values marked as "NA" (i.e., without any cell load consideration).

At step 618, the method increases the value of the temporary variable n for repeating the steps 612, 614, 616 for the next RSRP/RSRQ band. If all excellent, good and fair RSRP/RSRQ bands have been considered, stop the execution of xApp-4 at step 622.

At step 620 among the neighbour cells identified, the method finds the neighbour cell for the HO recommendation by identifying the neighbour cell that has the lowest sum of the "average" load values for all orders no larger than the order for the plurality of UEs (112a-e) (or UE under handover consideration) (as designated at step 602).

In an implementation, at step 620 for each neighbour cell, 9 "average" load values are maintained where, for n = 1, 2, ..., 9, the n^{th} value represents the sum of "average" load for all orders ≤ n. For the target cell recommendation, among all the neighbour cells identified, the method picks the target cell that has lowest m^{th} values where m is the order for the UE under handover consideration.

The flow chart 600 terminates at step 622 which stops the execution of this target cell recommendation xApp for the A3 event that triggered its execution.

In an example, the method in the flowchart 600 enables HO of the plurality of UEs (112a-e) based on the QoS requirements.

In another example, the method in the flowchart 600 enables efficient resource utilization.

In yet another example, the method in the flowchart 600 enables low latency and precise mobile load balancing.

In an implementation, consideration of the QoS requirements based traffic classes for HO of the plurality of UEs (112a-e) provides effective utilization of resources, thereby satisfying the most demanding requirements by the plurality of UEs (112a-e). In one of the examples, the method in the flow chart (600) enables the identification of the target cell for HO using QCI values.

It may be noted that the flowcharts 300 and 600 are explained to have above stated process steps; however, those skilled in the art would appreciate that the flowcharts 300 and 600 may have more/less number of process steps which may enable all the above stated embodiments of the present disclosure.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the disclosure. It is intended that the specification and examples be considered as exemplary, with the true scope of the disclosure being indicated by the claims.

The methods and processes described herein may have fewer or additional steps or states and the steps or states may be performed in a different order. Not all steps or states need to be reached. The methods and processes described herein may be embodied in, and fully or partially automated via, software code modules executed by one or more general purpose computers. The code modules may be stored in any type of computer-readable medium or other computer storage device. Some or all of the methods may alternatively be embodied in whole or in part in specialized computer hardware.

The results of the disclosed methods may be stored in any type of computer data repository, such as relational databases and flat file systems that use volatile and/or non-volatile memory (e.g., magnetic disk storage, optical storage, EEPROM and/or solid state RAM)

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method for identifying a target cell for handover (HO) by a Radio access network (RAN) controller (102) in an open RAN (O-RAN) environment (200), **characterized in that** steps of:
obtaining at least one quality of service (QoS) class identifier (QCI) level associated with at least one active bearer in the plurality of user equipment (112a-e);
obtaining a received signal strength value, a first load values and a plurality of second load values for each of the plurality of neighbour cells (108a, 108b); and
selecting the target cell from the plurality of neighbour cells (108a, 108b) based on the at least one QCI level in the plurality of user equipment (112a-e) and the received signal strength value, the first load value and the plurality of second load values for each the plurality of neighbour cells (108a, 108b).

2. The method as claimed in claim 1, wherein the received signal strength value comprises one of a Reference Signals Received Power (RSRP) and/or a Reference Signal Received Quality (RSRQ).

3. The method as claimed in claim 1 or claim 2, wherein the RAN controller (102) is connected with a plurality of user equipment (112a, 112b, 112c, 112d, 112e) via one or more E2 nodes positioned in a serving cell (110).

4. The method as claimed in any preceding claim, wherein the serving cell (110) is adjacent to a plurality of neighbour cells (108a, 108b) and the serving cell (110) covers a location for serving the plurality of user equipment (112a-e).

5. The method as claimed in any preceding claim, wherein the first load value comprises average physical resource block (PRB) values of each of the plurality of neighbour cells (108a, 108b).

6. The method as claimed in any preceding claim, wherein the plurality of second load values comprises average PRB values by the at least one QCI level for each of the plurality of neighbour cells (108a, 108b).

7. The method as claimed in any preceding claim, wherein the at least one QCI level corresponds to a QoS value required by the at least one active bearer in the plurality of user equipment (112a-e) to provide a service.

8. The method as claimed in any preceding claim, wherein the at least one active bearer corresponds to an active connection between at least one user equipment from the plurality of user equipment (112a-e) and a packet data network gateway to provide the service

9. The method as claimed in any preceding claim, wherein the method identify at least one order number for each of the at least one QCI level based on a predefined mapping of the at least one order number with the at least one QCI level, one or more available packet delay budget and one or more available packet error loss rate tolerance.

10. The method as claimed in any preceding claim, wherein the method performs sorting of the plurality of neighbour cells (108a, 108b) using a nested dual level threshold process.

11. The method as claimed in any preceding claim, wherein the target cell is selected from the sorted plurality of neighbour cells.

12. The method as claimed in any preceding claim, wherein the method performs sorting of the plurality of neighbour cells (108a, 108b) using a nested dual level threshold process.

13. The method as claimed in claim 10, wherein the nested dual level threshold process comprising:
comparing the received signal strength value of each of the plurality of neighbour cells (108a, 108b) with at least two threshold signal strength values; and
comparing the average physical resource block (PRB) utilization values of each of the plurality of neighbour cells (108a, 108b) with at least two threshold physical resource block (PRB) utilization values.

14. The method as claimed in any preceding claim, wherein the method comprises:
identifying an order number for each of the at least one QCI value based on a predefined mapping of the order number with the at least one QCI value, one or more available packet delay budget and one or more available packet error loss rate tolerance;
assigning lowest order number from the identified order number for each of the at least one QCI value for each active bearer for the UE;
performing sorting of neighbour cells by comparing a received signal strength and a PRB utilization value of each of the plurality of neighbour cells with at least two received signal strength thresholds and the first load value for each of the neighbour cells; and
selecting a target cell from the sorted plurality of neighbour cells, and the target cell has lowest sum of the plurality of second load values for each of the orders less than or equal to the assigned lowest order number associated with one or more active bearers in the UE.

15. The method as claimed in any preceding claim, wherein the plurality of second load values for each of the plurality of neighbour cells (108a, 108b) comprises 9 average load levels.
